# EUROPÄISCHE PATENTSCHRIFT

(11) **EP 3 258 132 B1**
(45) Veröffentlichungstag und Bekanntmachung des Hinweises auf die Patenterteilung: **05.08.2020**
(21) Anmeldenummer: 17175984.8
(22) Anmeldetag: 14.06.2017
(51) Int. Cl.: F16G 13/20, B66F 3/06, F16H 19/06

(54) **VORRICHTUNG ZUR UMLENKUNG VON SCHUBKETTEN UND SCHUBKETTE**
DEVICE FOR DEFLECTING PUSH CHAINS AND PUSH CHAIN
DISPOSITIF DE RENVOI DE CHAÎNE DE POUSSÉE ET CHAÎNE DE POUSSÉE

(30) Priorität: 15.06.2016 DE 102016110950
(43) Veröffentlichungstag der Anmeldung: 20.12.2017
(73) Patentinhaber: Wippermann jr. GmbH, 58091 Hagen (DE)
(72) Erfinder: Rossaint, Jens, 58313 Herdecke (DE)
(74) Vertreter: Patentanwälte Dörner & Kötter PartG mbB

(56) Entgegenhaltungen:
- EP-A1- 0 936 378
- DE-A1- 10 124 131
- DE-A1-102014 007 458
- US-A1- 2009 008 615
- US-A1- 2013 205 927

## Beschreibung

Die Erfindung betrifft eine Vorrichtung zur Umlenkung von Schubketten, umfassend eine Führung, die aus mindestens zwei Führungseinsätzen besteht, in denen Umlenkbahnen ausgebildet sind, wobei die Umlenkbahnen jeweils einen geraden Ein- bzw. Auslaufabschnitt und einen dazu in einem Winkel ausgerichteten geraden Ein- bzw. Auslaufabschnitt haben, zwischen denen sich jeweils ein Kurvenabschnitt befindet. Die Erfindung betrifft außerdem eine Schubkette für eine derartige Vorrichtung.

Schubketten dienen beispielsweise zum Transport von Waren. Sie finden dabei auch Anwendung zum Heben bzw. Absenken der Waren. Im Gegensatz zu konventionellen Ketten, mit denen man Lasten lediglich ziehen kann, besteht mit Schubketten die Möglichkeit, Lasten sowohl zu ziehen als auch zu schieben. Hinzu kommt, dass Schubketten im Vergleich zu konventionellen Ketten nicht gespannt werden müssen.

Eine Vorrichtung der eingangs genannten Art ist beispielsweise aus der EP 1 006 074 B1 bekannt. Bei dieser erfolgt das Abknicken der Schubkette mit Hilfe einer Führung, die einen viertelkreisförmigen Abschnitt aufweist, an den sich an dem einen Ende ein horizontaler Abschnitt und an dem anderen Ende ein vertikaler Abschnitt anschließt. Aus der DE 198 05 157 A1 ist eine Kette für einen Schubkettenantrieb bekannt, bei der die Schubelemente einen abgerundeten Kantenbereich aufweisen, der das Abknicken der Kette ermöglicht. Die Schubelemente sind über Innenlaschen miteinander verbunden. Andere Vorrichtungen und Schubketten sind aus der US 2013/0205927, DE 10 2014 007 458 oder DE10124131 bekannt.

Die bekannten Schubketten sowie die Vorrichtungen zur Umlenkung von Schubketten erfüllen die an sie gestellten Aufgaben. Allerdings führt bei der Umlenkung der Schubketten der bekannte Verlauf auf einer Teilkreisbahn zu einer Relativbewegung der abgerundeten Kantenbereiche zweier benachbarter Schubelemente. Es stellt sich ein Gleiten zwischen den Schubelementen ein, was einen erhöhten Verschleiß zur Folge hat.

Hier will die Erfindung Abhilfe schaffen. Der Erfindung liegt die Aufgabe zu Grunde, eine Vorrichtung zur Umlenkung von Schubketten zu schaffen, bei der ein Gleiten zwischen den benachbarten Schubelementen einer Schubkette während der Umlenkung verhindert ist. Gemäß der Erfindung wird diese Aufgabe dadurch gelöst, dass der Verlauf der ersten Umlenkbahn zu dem Verlauf der zweiten Umlenkbahn verschieden ist.

Mit der Erfindung ist eine Vorrichtung zur Umlenkung von Schubketten geschaffen, bei der ein Gleiten zwischen den benachbarten Schubelementen einer Schubkette während der Umlenkung verhindert ist. Vielmehr wälzen die Abrundungen aufeinander ab. Dies ist Folge der durch die unterschiedlichen Umlenkbahnen hervorgerufenen Kurven, die die Bolzen bzw. Führungsrollen der Schubkette erfahren. Der Winkel zweier benachbarter Schubelemente zu dem sie verbindenden Kettenglied ist dabei immer gleich.

Die Aufgabe wird erfindungsgemäß darüber hinaus durch eine Schubkette für eine Vorrichtung nach einem der vorhergehenden Ansprüche gelöst, bestehend aus Schubelementen und Kettengliedern, wobei die Schubelemente und die Kettenglieder durch Bolzen beweglich miteinander verbunden sind, wobei benachbarte Bolzen abwechselnd unterschiedlich weit seitlich über die Schubelemente hervorstehen. Durch die abwechselnd unterschiedlich weit seitlich hervorstehenden Bolzen ist gewährleistet, dass die Bolzen den unterschiedlichen Umlenkbahnen der ersten Seitenwand und der zweiten Seitenwand folgen können.

In Weiterbildung der Erfindung ist auf jedem Bolzen mindestens eine Führungsrolle angeordnet und an einem Ende eines Bolzens eine Führungsrolle mehr als an dem anderen Ende des Bolzens angeordnet ist, wobei die Seite mit der überzähligen Führungsrolle zwischen benachbarten Bolzen abwechselt. Die Anordnung der Führungsrollen auf den Bolzen führt zu verbesserten Laufeigenschaften der Schubkette im Bereich der Umlenkung. Gleichzeitig sind die Reibung und damit der Verschleiß reduziert.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:

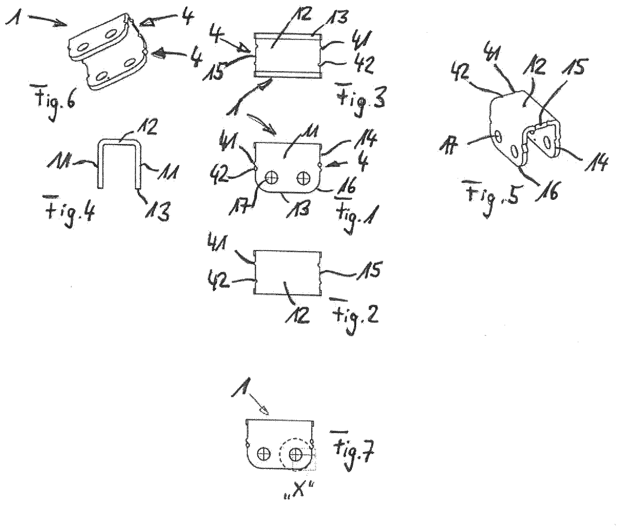

- Figur 1: die Ansicht eines Schubelements;
- Figur 2: die Draufsicht auf den in Figur 1 dargestellten Schubelement;
- Figur 3: die Untersicht auf den in Figur 1 dargestellten Schubelement;
- Figur 4: die Seitenansicht von rechts des in Figur 1 dargestellten Schubelements;
- Figur 5: die perspektivische Darstellung von oben des in Figur 1 dargestellten Schubelements;
- Figur 6: die perspektivische Darstellung von unten des in Figur 1 dargestellten Schubelements;
- Figur 7: die Ansicht des in Figur 1 dargestellten Schubelements;
- Figur 8: das Detail "X" aus Figur 7 in vergrößerter Darstellung;
- Figur 9: die abschnittsweise Darstellung einer Schubkette;
- Figur 10: die Draufsicht auf die in Figur 9 dargestellte Schubkette;
- Figur 11: die Untersicht der in Figur 9 dargestellten Schubkette;
- Figur 12: die Seitenansicht von rechts der in Figur 9 dargestellten Schubkette;
- Figur 13: die perspektivische Darstellung von unten der in Figur 9 dargestellten Schubkette;
- Figur 14: die abschnittsweise Darstellung einer Schubkette in abgewinkelter Position;
- Figur 15: die Untersicht auf die in Figur 14 dargestellte Schubkette;
- Figur 16: die perspektivische Darstellung von oben der in Figur 14 dargestellten Schubkette;
- Figur 17: die Untersicht auf eine Vorrichtung zur Umlenkung von Schubketten mit abschnittsweiser Darstellung einer Schubkette;
- Figur 18: die Ansicht der einen Seite der in Figur 17 dargestellten Vorrichtung;
- Figur 19: die Ansicht der anderen Seite der in Figur 17 dargestellten Vorrichtung;
- Figur 20: die Seitenansicht vom rechts der in Figur 19 dargestellten Vorrichtung;
- Figur 21: die perspektivische Darstellung von unten der in Figur 17 dargestellten Vorrichtung;
- Figur 22: die perspektivische Darstellung von oben der in Figur 17 dargestellten Vorrichtung;
- Figur 23: die vergrößerte abschnittsweise Darstellung der Schubkette in abgewinkelter Position gemäß Figur 14;
- Figur 24: die Gegenüberstellung zweier Umlenkbahnen in vergrößerter Darstellung.

Die in den Ausführungsbeispielen dargestellten Schubketten bestehen aus Schubelementen 1 und Kettengliedern 2. Die Schubelemente 1 und die Kettenglieder 2 sind durch Bolzen 3 beweglich miteinander verbunden. Sie durchlaufen eine Vorrichtung zur Umlenkung von Schubketten. Hierzu weisen die Schubketten Führungsrollen 5 auf, mit denen sie einerseits mit einem Kettenantrieb mit Kettenrädern 6 in Kontakt stehen, andererseits in einer Führung 7 geführt sind.

Die Schubelemente 1 sind im Ausführungsbeispiel U-förmig ausgebildet. Andere Ausbildungen für die Schubelemente 1 sind ebenfalls möglich. Aufgrund der U-förmigen Ausgestaltung des Ausführungsbeispiels sind Schenkel 11 ausgebildet, die durch einen Boden 12 miteinander verbunden sind. Die Schenkel 11 bilden an ihren dem Boden 12 abgewandten, freien Enden Seitenkanten 13 aus. In den Schenkeln 11 sind Lochungen 17 für den Durchtritt der Bolzen 3 vorgesehen.

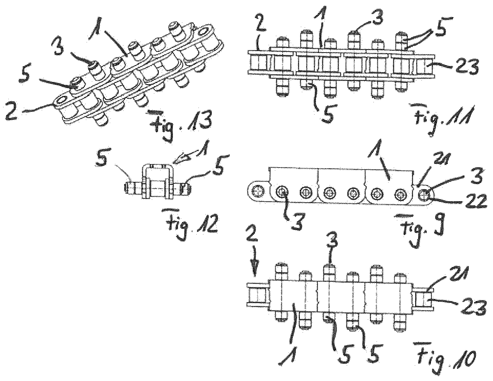

An ihren Stirnseiten weisen die Schubelemente 1 an den Schenkeln 11 Stützflächen 14 und am Boden 12 Stützflächen 15 auf, die in gestreckter Stellung der Kette, wie sie beispielsweise in den Figuren 9 bis 13 dargestellt ist, mit den Stützflächen 14, 15 des jeweils benachbarten Schubelementes 1 in Kontakt stehen. Am Übergang der vertikal ausgerichteten Stirnflächen 14 an den Schenkel 11 zu den Seitenkanten 13 sind an jedem Schubelement 1 Abrundungen 16 ausgebildet.

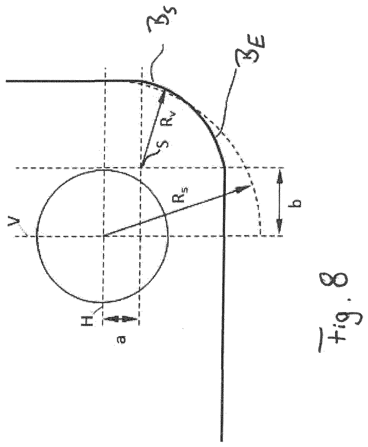

Die Abrundungen 16 haben einen kurvenförmigen Verlauf. In der Vergrößerung des Details "X" in Figur 8 ist der Verlauf der Abrundung 16 im Vergleich zum Verlauf einer Kreisbahn gegenübergestellt, wobei die Kreisbahn als Strichlinie dargestellt ist. Die Kreisbahn hat den Radius Rs, welcher der Schwenkradius um den Mittelpunkt der Bolzen 3 wiedergibt. Ersichtlich beginnt die Krümmung der Abrundung 16 im Abstand a zur Horizontalen H und endet im Abstand b zur Vertikalen V. Es ist erkennbar, dass der Abstand a zur Horizontalen H kleiner als der Abstand b zur Vertikalen V ist. Der Schnittpunkt der Strichlinien des Abstands a zur Horizontalen H und des Abstands b zur Vertikalen ist mit "S" gekennzeichnet. Aus der Vergrößerung ist zudem zu entnehmen, dass der Abstand zwischen dem Schnittpunkt S und der Abrundung 16 im Abstand a zur Horizontalen H größer ist als der Abstand zwischen dem Schnittpunkt S und der Abrundung 16 im Abstand b zur Vertikalen V. Daraus ergibt sich, dass die Abrundungen 16 keinen teilkreisförmigen Verlauf haben. Vielmehr verkleinert sich der Radius von der Horizontalen in Richtung zur Vertikalen. Die Abrundungen 16 weisen in Folge dessen einen Spannbereich Bs und einen Einlaufbereich B_{E} auf. Durch diese konstruktive Ausgestaltung wird bei der Umlenkung der Schubelemente eine Vorspannung im Bereich der Abrundungen erzeugt. Diese Vorspannung bleibt im ausgestreckten Zustand erhalten und erzeugt zusätzlich durch die Kantengestaltung eine Rastung der Schubelemente. Das bei den aus dem Stand der Technik bekannten Schubketten vorhandene Spiel zwischen den einzelnen Schubelementen wird auf diese Weise aufgehoben. Die Schubkette wird dadurch stabilisiert und neigt daher nicht zum Kippen.

Mindestens eine Stützfläche 14, 15 der Schubelemente 1 weist Mittel 4 zur Übertragung von Querkräften auf. Die Mittel 4 zur Übertragung von Querkräften sind formschlüssig ausgebildet. In den Ausführungsbeispielen sind die Mittel 4 zur Übertragung von Querkräften von Verzahnungen an den Schenkeln 11 und an dem Boden 12 gebildet. Die Verzahnungen sind im Ausführungsbeispiel jeweils von einem vorstehenden Zahn 41 und einer benachbart dazu angeordneten Kerbe 42 gebildet. Erkennbar sind die Zähne 41 und Kerben 42 derart an den Stützflächen 14, 15 angeordnet, sie mit den Zähnen 41 und Kerben 42 der jeweils benachbarten Schubelement in Eingriff treten können.

Die Kettenglieder 2 bestehen jeweils aus zwei Laschen 21, die jeweils mit zwei Lochungen 22 versehen sind. In die Lochungen 22 sind jeweils Buchsen fest eingepresst, auf denen jeweils eine Rolle 23 läuft. Die Rollen 23 sind auf den Buchsen der Kettenglieder 2 drehbar gelagert.

Bei der Schubkette stehen zueinander benachbarte Bolzen 3 abwechselnd unterschiedlich weit seitlich über die Schubelemente 1 hervor. Im Ausführungsbeispiel ist auf jedem Bolzen 3 mindestens eine Führungsrolle 5 angeordnet. Erkennbar ist an einem Ende eines Bolzens 3 eine Führungsrolle 5 mehr als an dem anderen Ende des Bolzens 3 angeordnet ist, wobei die Seite mit der überzähligen Führungsrolle 5 zwischen benachbarten Bolzen 3 abwechselt.

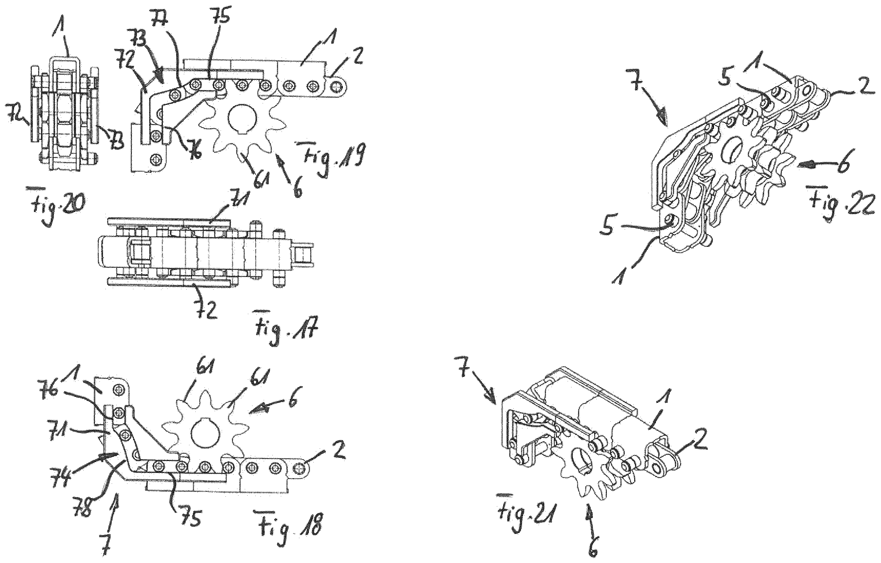

Im Ausführungsbeispiel sind alle Bolzen 3 über die Schenkel 11 der Schubelemente 1 verlängert ausgebildet. Auf dem überstehenden Bereich der Bolzen 3 sind die Führungsrollen 5 montiert, mit denen eine Abstützung und Umlenkung der Schubkette im Antrieb ermöglicht ist. Im Ausführungsbeispiel sind auf den Enden benachbarter Bolzen 3 abwechselnd eine oder zwei Rollen 5 angeordnet. In Abwandlung des Ausführungsbeispiels besteht auch die Möglichkeit, anstelle mehrerer Rollen an einem Ende eines Bolzens nur eine Rolle mit einer größeren Breite zu verwenden als an dem anderen Ende des Bolzens. Auch besteht in Abwandlung des Ausführungsbeispiels die Möglichkeit, auf einer Seite auf dem Bolzen 3 eine Rolle 5 anzuordnen und auf der anderen Seite den Bolzen 3 bündig mit der jeweiligen Stützfläche abschließen zu lassen, so dass dort keine Rolle 5 vorgesehen ist. Auch besteht die Möglichkeit, die Schubkette rollenlos zu führen, so dass nur die Bolzen in der Führung 7 geführt sind. Durch das abwechselnd unterschiedlich weite Hervorstehen der Bolzen bzw. Rollen lässt sich eine unterschiedliche Kurvenbahn bei der Umlenkung der jeweiligen Bolzen eines Schubelements 1 hervorrufen, wie nachfolgend erläutert wird. Die erfindungsgemäße Schubkette ist in den Figuren 17 bis 22 in abgewinkelter Position im Bereich des Kettenantriebs dargestellt. Der Kettenantrieb umfasst drei Kettenräder 6, welche im Ausführungsbeispiel im Bereich einer Führung 7 angeordnet sind. Die Kettenräder 6 weisen Zähne 61 auf, deren Teilung dem Abstand der Bolzen 3 entspricht. Die Zähne 61 kämmen mit den auf den Bolzen 3 der Schubkette angeordneten Führungsrollen 5 sowie den Rollen 23 und treiben die Schubkette an.

Die Führung 7 ist von zwei Führungseinsätzen gebildet, die im Ausführungsbeispiel aus einer ersten Seitenwand 71 und einer zweiten Seitenwand 72 besteht, in denen Umlenkbahnen 73 und 74 für die Bolzen 3 bzw. Führungsrollen 5 ausgebildet sind. Die Umlenkbahnen 73 und 74 haben im Ausführungsbeispiel jeweils einen geraden horizontalen Ein- bzw. Auslaufabschnitt 75 und einen dazu in einem Winkel ausgerichteten vertikalen Ein- bzw. Auslaufabschnitt 76 für die Bolzen 3 bzw. Führungsrollen 5; der Ein- bzw. Auslaufabschnitt 75 ist im Ausführungsbeispiel zum Ein- bzw. Auslaufabschnitt 76 um 90° gedreht. Andere Winkel, bspw. 45°, sind ebenfalls möglich. Zwischen den Ein- und Auslaufabschnitten 75, 76 befindet sich jeweils in den Umlenkbahnen 73, 74 ein Kurvenabschnitt 77, 78. Die Kurvenabschnitte 77 und 78 haben ein von einem Kreisabschnitt abweichendes Profil. Wie der Vergleich der Figuren 18 und 19 zeigt, haben die Umlenkbahnen 73 und 74 einen zueinander verschiedenen Verlauf, so dass die Umlenkbahnen 73 und 74 nicht deckungsgleich verlaufen; die aus den Seitenwänden 71 und 72 bestehenden Führungseinsätze bilden folglich ein asymmetrisches gegenüberliegendes Paar. Dies führt in Folge der abwechselnd weit hervorstehenden Bolzen 3 bzw. Führungsrollen 5 zu einer unterschiedlichen Kurvenbahn bei der Umlenkung der jeweiligen Bolzen 3 eines Schubelementes 1, weil lediglich die am weitesten hervorstehenden Bolzen 3 bzw. Führungsrollen 5 in eine der Umlenkbahnen 73 und 74 in den Seitenwänden 71 und 72 eintreten, wie insbesondere den Figuren 17, 21 und 22 entnommen werden kann. In Folge dessen läuft jeweils der vorauseilende Bolzen eines Schubelements auf einer anderen Bahn als der nachfolgende Bolzen.

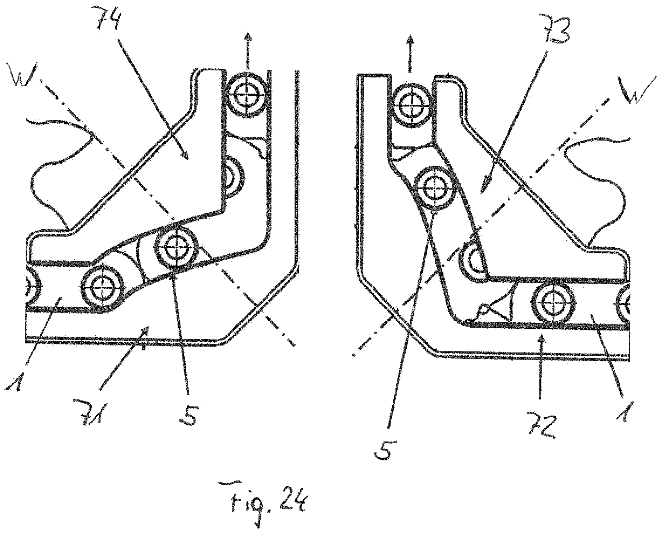

Der verschiedene Verlauf der Umlenkbahnen 73 und 74 kann anhand der Figur 24 erläutert werden. Darin sind die erste Seitenwand 71 und die zweite Seitenwand 72 um die Hochachse um 180° gedreht dargestellt. Ersichtlich haben die Umlenkbahnen 73 und 74 einen unterschiedlichen Verlauf. Würde aber die Umlenkbahn 73 oder die Umlenkbahn 74 um die strichpunktiert eingezeichnete Winkelhalbierende W gespiegelt, würde sich ein übereinstimmender Verlauf der Umlenkbahnen 73 und 74 einstellen, der in Funktionsanordnung der Seitenwände 71 und 72 zu einem deckungsgleichen Verlauf der Umlenkbahnen 73 und 74 führen würde. Folglich können die Führungseinsätze, die im Ausführungsbeispiel von den Seitenwänden 71 und 72 gebildet sind, identisch hergestellt werden; und sie müssen lediglich mit unterschiedlicher Ausrichtung verbaut werden, um die erfindungsgemäße Anordnung zu erreichen. Im Ausführungsbeispiel sind sie um die Winkelhalbierende gedreht. Somit besteht die Möglichkeit, die Führungseinsätze bzw. die Seitenwände 71, 72 auf dem selben Werkzeug herzustellen.

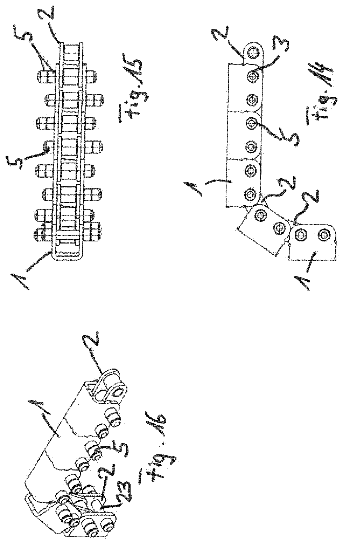

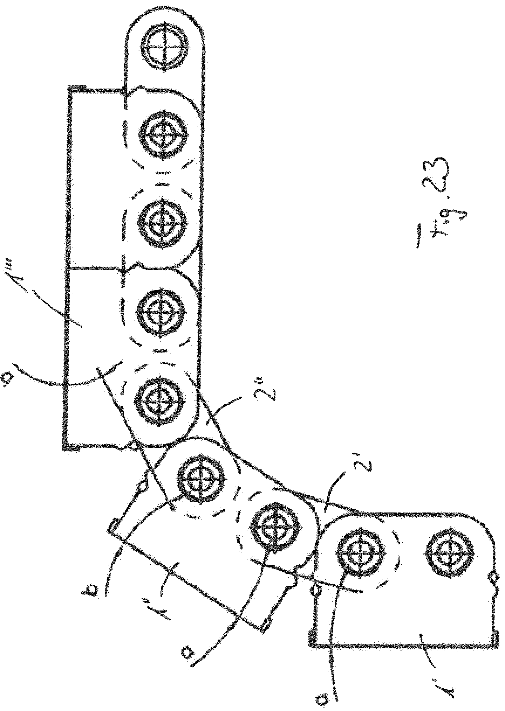

Durch das Abfahren einer unterschiedlichen Kurvenbahn der vorderen und hinteren Bolzen 3 eines Schubelementes 1 erfolgt keine Relativbewegung zwischen den miteinander in Kontakt stehenden Abrundungen 16 zweier benachbarter Schubelemente 1, so dass ein Gleiten bei der Umlenkung benachbarter Schubelemente 1 vermieden ist. Vielmehr wälzen die Abrundungen aufeinander ab. Dies ist Folge der durch die unterschiedlichen Umlenkbahnen 73 und 74 hervorgerufenen Kurven, die die vorderen und hinteren bzw. vorauseilenden und nachfolgenden Bolzen bzw. Führungsrollen erfahren. Benachbarte Schubelemente 1 liegen folglich spielfrei aneinander. Dagegen ist zwischen den Kettengliedern 2 ein Spiel erforderlich, welches in den Figuren 11 und 15 erkennbar ist. Die von den Umlenkbahnen 73 und 74 hervorgerufenen Kurven sind derart gestaltet, dass der Winkel zweier benachbarter Schubelemente 1 zu dem sie verbindenden Kettenglied 2 immer gleich ist, wie dies der Darstellung gemäß Figur 23 zu entnehmen ist. Der Winkel a zwischen dem vertikal ausgerichteten Schubelement 1' zum Kettenglied 2' ist gleich dem Winkel a zwischen dem in der Umlenkbewegung befindlichen Schubelement 1" zum Kettenglied 2'. Ebenso ist der Winkel b zwischen dem horizontal ausgerichteten Schubelement 1"' zum Kettenglied 2" gleich dem Winkel b zwischen dem in der Umlenkbewegung befindlichen Schubelement 1" zum Kettenglied 2". Bei einer aus dem Stand der Technik bekannten kreisabschnittsförmigen Bahn kommt es dagegen zu einer Relativbewegung zwischen den benachbarten Schubelementen, was zu einem Gleiten zwischen den Schubelementen führt, was wiederum einen erhöhten Verschleiß zur Folge hat.

## Patentansprüche

1. Vorrichtung zur Umlenkung von Schubketten mit seitlich hervorstehenden Bolzen (3), umfassend eine Führung (7), die aus mindestens zwei Führungseinsätzen besteht, die aus einer ersten Seitenwand (71) und einer zweiten Seitenwand (72) bestehen, zwischen denen die Schubkette geführt ist und in denen eine erste Umlenkbahn (73) und eine zweite Umlenkbahn (74) ausgebildet sind, wobei die Umlenkbahnen (73, 74) jeweils einen geraden Ein- bzw. Auslaufabschnitt (75) und einen dazu in einem Winkel ausgerichteten geraden Ein- bzw. Auslaufabschnitt (76) haben, zwischen denen sich jeweils ein Kurvenabschnitt (77, 78) befindet, **dadurch gekennzeichnet, dass** der Verlauf der ersten Umlenkbahn (73) in der ersten Seitenwand (71) zu dem Verlauf der zweiten Umlenkbahn (74) in der zweiten Seitenwand (72) verschieden ist.

2. Vorrichtung nach Anspruch 1, **dadurch gekennzeichnet, dass** sich aber der Kurvenabschnitt (77) in der Umlenkbahn (73) im Wesentlichen horizontal erstreckt und sich der Kurvenabschnitt (78) in der Umlenkbahn (74) im Wesentlichen vertikal erstreckt.

3. Vorrichtung nach Anspruch 1 oder 2, **dadurch gekennzeichnet, dass** die Führungseinsätze identisch sind und mit unterschiedlicher Ausrichtung verbaut sind.

4. Vorrichtung nach einem der Ansprüche 1 bis 3, **dadurch gekennzeichnet, dass** der Ein- bzw. Auslaufabschnitt (75) zum Ein- bzw. Auslaufabschnitt (76) um 90° gedreht ist.

5. Schubkette für eine Vorrichtung nach einem der vorhergehenden Ansprüche, bestehend aus Schubelementen (1) und Kettengliedern (2), wobei die Schubelemente (1) und die Kettenglieder (2) durch Bolzen (3) beweglich miteinander verbunden sind, **dadurch gekennzeichnet, dass** benachbarte Bolzen (3) abwechselnd unterschiedlich weit seitlich über die Schubelemente (1) hervorstehen, wobei die Seite, auf der die Bolzen (3) seitlich über die Schubelemente (1) hervorstehen, zwischen benachbarten Bolzen (3) abwechselt.

6. Schubkette nach Anspruch 5, **dadurch gekennzeichnet, dass** auf jedem Bolzen (3) mindestens eine Führungsrolle (5) angeordnet ist und an einem Ende eines Bolzens (3) eine Führungsrolle (5) mehr als an dem anderen Ende des Bolzens (3) angeordnet ist, wobei die Seite mit der überzähligen Führungsrolle (5) zwischen benachbarten Bolzen (3) abwechselt.

7. Schubkette nach Anspruch 5 oder 6, **dadurch gekennzeichnet, dass** die Führung ausschließlich über die am weitesten hervorstehenden Bolzen (3) und/oder Führungsrollen (5) erfolgt.

## Claims

1. Device for deflecting push chains with laterally projecting bolts (3) comprising a guide (7), which consists of at least two guide inserts, which consist of a first side wall (71) and a second side wall (72), between which the push chain is guided and in which a first deflecting track (73) and a second deflecting track (74) are formed, wherein the deflecting tracks (73, 74) each have a straight inlet or outlet section (75) and a straight inlet or outlet section (76) oriented at an angle thereto, between which a curve section (77, 78), respectively, is located, **characterised in that** the course of the first deflecting track (73) in the first side wall (71) is different from the course of the second deflecting track (74) in the second side wall (72).

2. Device according to claim 1, **characterised in that** the curve section (77) in the deflecting track (73) extends substantially horizontally and the curve section (78) in the deflecting track (74) extends substantially vertically.

3. Device according to claim 1 or 2, **characterised in that** the guide inserts are identical and are installed with different orientations.

4. Device according to one of claims 1 to 3, **characterised in that** the inlet or outlet section (75) is rotated by 90° relative to the inlet or outlet section (76).

5. Push chain for a device according to one of the previous claims consisting of push elements (1) and chain links (2), wherein the push elements (1) and the chain links (2) are movably connected to one another by bolts (3), **characterised in that** adjacent bolts (3) laterally project to different extents beyond the push elements (1) in an alternating manner, wherein the side on which the bolts (3) laterally project beyond the push elements (1) alternates between adjacent bolts (3).

6. Push chain according to claim 5, **characterised in that** on each bolt (3) at least one guide roller (5) is arranged and that on one end of a bolt (3) one guide roller (5) more is arranged than on the other end of the bolt (3), wherein the side with the surplus guide roller (5) alternates between adjacent bolts (3).

7. Push chain according to claim 5 or 6, **characterised in that** the guiding takes place exclusively via the bolts (3) and/or guide rollers (5) projecting the furthest.

## Revendications

1. Dispositif de renvoi de chaînes de poussée avec goujons (3) saillants latéralement, comprenant un guidage (7) qui se compose d'au moins deux inserts de guidage eux-mêmes composés d'une première paroi latérale (71) et d'une deuxième paroi latérale (72) entre lesquelles la chaîne de poussée est guidée et dans lesquelles sont configurées une première piste de renvoi (73) et une deuxième piste de renvoi (74), sachant que les pistes de renvoi (73, 74) présentent respectivement un segment d'entrée et de sortie (75) rectiligne et un segment d'entrée et de sortie (76) rectiligne formant un angle par rapport au précédent, entre lesquels segments se trouve respectivement un segment de virage (77, 78), **caractérisé en ce que** le tracé de la première piste de renvoi (73) dans la première paroi latérale (71) est différent du tracé de la deuxième piste de renvoi (74) dans la deuxième paroi latérale (72).

2. Dispositif selon la revendication 1, **caractérisé en ce que** le segment de virage (77) dans la piste de renvoi (73) s'étend toutefois essentiellement à l'horizontale et que le segment de virage (78) dans la piste de renvoi (74) s'étend essentiellement à la verticale.

3. Dispositif selon la revendication 1 ou 2, **caractérisé en ce que** les inserts de guidage sont identiques et qu'ils sont montés selon des orientations différentes.

4. Dispositif selon l'une des revendications 1 à 3, **caractérisé en ce que** le segment d'entrée et le segment de sortie (75) sont tournés à 90° par rapport au segment d'entrée et de sortie (76).

5. Chaîne de poussée pour un dispositif selon l'une des revendications précédentes, composé d'éléments de poussée (1) et de maillons de chaîne (2), sachant que les éléments de poussée (1) et les maillons de chaîne (2) sont reliés de manière mobile entre eux par des goujons (3), **caractérisée en ce que** des goujons voisins (3) font en alternance saillie latéralement selon des longueurs différentes au-dessus des éléments de poussée (1), sachant que le côté, sur lequel les goujons (3) font latéralement saillie au-dessus des éléments de poussée (1), change entre goujons voisins (3).

6. Chaîne de poussée selon la revendication 5, **caractérisée en ce que** sur chaque goujon (3) est disposé au moins un galet de guidage (5) et qu'à une extrémité d'un goujon (3) est disposé un galet de guidage (5) de plus qu'à l'autre extrémité du goujon (3), sachant que le côté présentant le galet de guidage (5) surnuméraire change entre des goujons voisins (3).

7. Chaîne de poussée selon la revendication 5 ou 6, **caractérisé en ce que** le guidage est effectué exclusivement via les goujons (3) et/ou les galets de guidage (5) faisant saillie le plus loin.
